# EUROPEAN PATENT APPLICATION

(11) **EP 1 038 440 A1**
(43) Date of publication of application: **27.09.2000**
(21) Application number: 99610020.2
(22) Date of filing: 19.03.1999
(51) Int. Cl.: A01M 21/04

(54) **A device for killing unwanted vegetation by means of steam**

(71) Applicant: WR Damp ApS, 2640 Hedehusene (DK)
(72) Inventor: Nielsen, Henrik G., 2640 Hedehusene (DK); Damgaard, Carsten, 6621 Gesten (DK); Hjorth-Westh, Anders, 2640 Hedehusene (DK)
(74) Representative: Joergensen, Bjoern Barker

(57) **Abstract**

The apparatus comprises an upwards closed and downwards open cover (1) for moving across the unwanted vegetation (7) in a travelling direction (12) at simultaneous diffuse discharge of steam under the cover (1), and a steam discharge device (10) for the diffuse discharge of steam below the cover (1), said device comprising an inlet (2) for steam supply, a slit-shaped outlet (9) and a horizontal duct (11) for guiding steam from the inlet (2) to the outlet (9), whereby the slit-shaped outlet (9) extends transversely to the travelling direction (12) at a distance from the front and back ends (13, 14) of the cover (1), and in that the horizontal duct (11a, 11b) is laterally defined by walls (15a, 15b).

## Description

The present invention relates to an apparatus for destroying unwanted vegetation by means of steam, said apparatus comprising an upwards closed and downwards open cover for moving across the unwanted vegetation in a travelling direction at simultaneous diffuse discharge of steam under the cover, and a steam discharge device for the diffuse discharge of steam under the cover, said device comprising an inlet for steam supply, a slit-shaped outlet and a horizontal duct for guiding steam from the inlet to the outlet.

Such an apparatus is known from Danish patent application No. PA 1997 00569 and the corresponding Dutch patent application NL 10.09183 which disclose means for ensuring a diffuse discharge of steam under the cover and which show a cover with a central steam inlet and a baffle plate under the inlet, said baffle plate extending towards the side walls of the cover, whereby a wide slit is provided all along the edge of the baffle plate between the baffle plate and the side walls of the cover. The object of the baffle plate or the means for securing a diffuse discharge of steam is to provide a cloud of steam under the cover shrouding the above-ground parts of the unwanted vegetation, and to prevent big amounts of steam from blowing down towards the ground, which causes big losses of energy.

Diffuse discharge of steam is to be understood as the opposite of discharge in a jet from a nozzle with a view to directly hitting the weeds or penetrating into the ground.

The object of the invention is to provide an improved apparatus of the type mentioned by way of introduction.

This object is met thereby that the slit-shaped outlet extends transversely to the travelling direction at a distance from the front and back ends of the cover, and in that the horizontal duct is laterally defined by walls. In this way is obtained that a cloud of steam is formed under the cover, said cloud extending with a profile in the travelling direction substantially homogeneously transversely to the cover under the outlet. The outlet has, due to its extension transversely to the travelling direction, a substantially bigger flow area than the inlet, and consequently the flow rate of the steam is considerably reduced, and the steam flows quite slowly out under the cover and will under influence from partial pressure differences be pulled forwards and backwards under the cover. On account of that a cloud will be created under the outlet, said cloud having a certain extension and a profile in the travelling direction, whereby a certain staying time in respect of the above-ground plants is obtained, when the apparatus is advanced over the unwanted vegetation.

The walls of the duct are preferably diverging in order to avoid turbulence and in order to ensure, to a higher degree, an even distribution of steam over the outlet.

The duct comprises preferably a first section extending in one direction and being directly connected with the inlet and ending in a second section extending in another direction below the first section to the outlet. In this way a compact construction of the steam discharge device is obtained which to a high degree ensures an even distribution of steam over the outlet. Preferably, two first sections are provided, said sections extending in each their respective directions from the inlet and ends in each their respective second section, whereby the two second sections extend towards another, preferably to each their respective outlet, the two outlets being separated by an outlet guide member. In this way the steam flow is divided in two and discharged side by side under the cover, which contributes to distributing the steam cloud under the cover forwards and backwards. An inlet guide member is preferably provided at the inlet for distribution of the steam supplied between the two first sections.

To ensure an adequately low discharge speed of steam the outlet preferably has a width of at least 10 mm, preferably not more than 40 mm. The width is preferably in the range of 15-35 mm, preferably 20-30 mm.

The outlet is preferably positioned more than 20% of the length of the cover from the front and back end, respectively of the cover, and preferably centrally below the cover such that the steam discharged from the outlet gets sufficient room for being distributed forwards and backwards.

In an apparatus for destroying unwanted vegetation by means of steam discharged diffusely under a cover, a temperature sensor is preferably placed under the cover and means are provided for controlling the steam supply in dependence of the temperature measured. In this way the steam supply is reduced when during operation a surface with only little vegetation is being passed, and the steam supply is increased when during a surface with much vegetation is passed, as the steam condensates on the vegetation which results in a lowering of the temperature under the cover. Hereby an effective treatment of surfaces having a considerable vegetation is obtained and waste of steam is avoided on surfaces having relatively little vegetation.

The invention will now be explained in the following by means of an example of an embodiment with reference to the schematic drawing, in which
Figs 1a and 1b show a known apparatus for destroying unwanted vegetation by steam, viewed from above and in a vertical, longitudinal section,
Fig. 2 an apparatus according to the invention, seen from above, the upper parts being removed,
Fig. 3 a sectional view along the line III-III in Fig. 2, and
Fig. 4 a sectional view along the line IV-IV in Fig. 2.

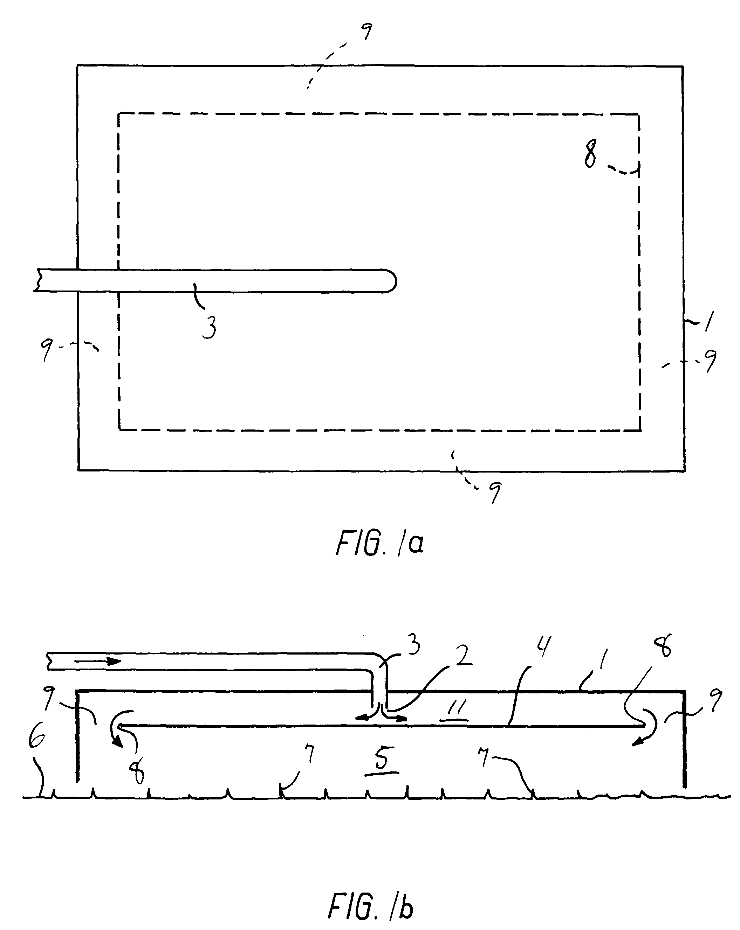

Figs 1a and 1b show a cover 1 with an inlet 2 for supply of steam and a pipe 3 connected with the inlet 2. Under the cover, a baffle or guide plate 4 is provided which establishes a horizontal, radial duct 11, thus providing for distribution of steam from the inlet 2 to be discharged diffusely in the space 5 between the cover 1 or the guide plate 4 and the ground 6, on which weed 7 to be destroyed is present. The steam is thereby guided from the inlet 2 over the baffle plate 4 to its edge 8, at which a slit 9 opening down into the space 5 is provided.

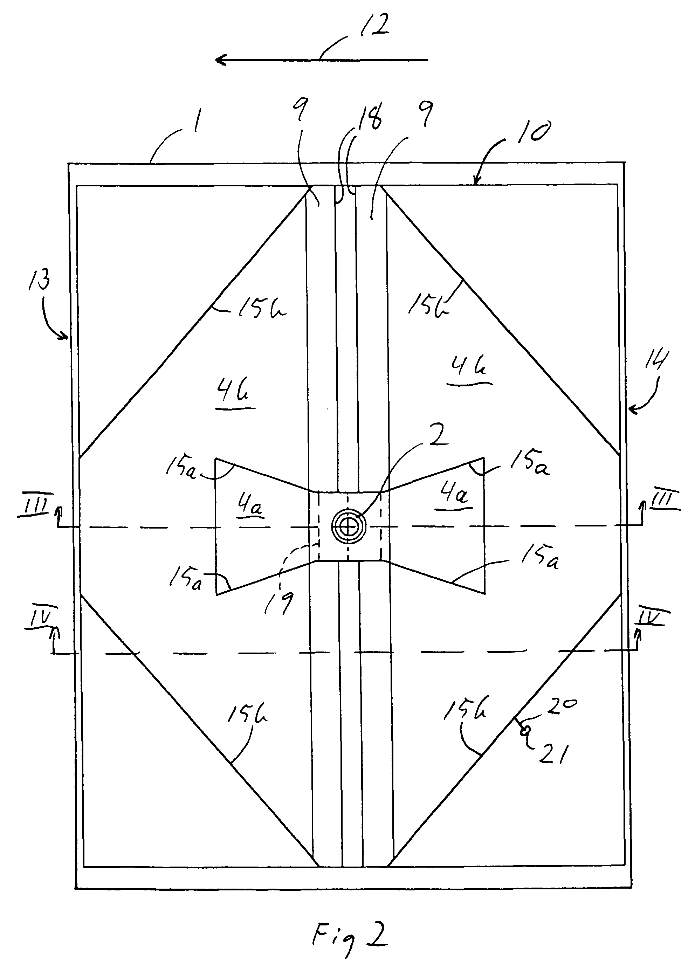

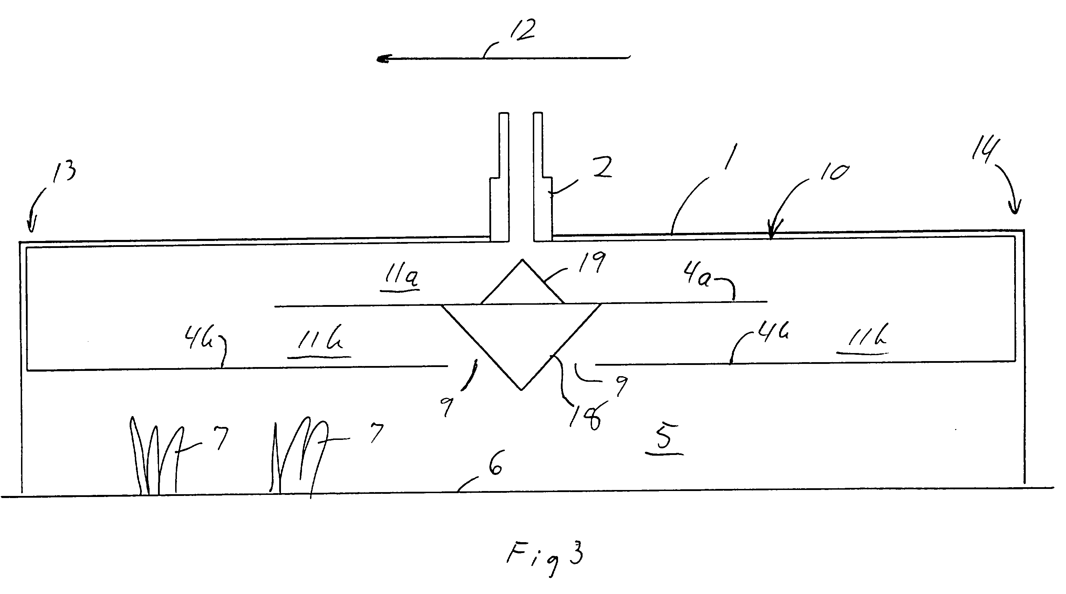

Figs 2-4 show an apparatus according to the present invention with an upwards open and downwards closed cover 1, under which a steam discharge device 10 is provided. The apparatus has, during operation, an intended travelling direction 21 and thus a front end 13 and a back end 14.

The steam discharge device is in the embodiment shown symmetrical about a vertical plane transversely to the travelling direction 12 and comprises an inlet 2, through which steam may be led into two first horizontal duct sections 11a defined by a first horizontal guide plate 4a and diverging side walls 15a and which extends in each their direction forwards and backwards, respectively. An inlet guide member 19 distributes the steam between the two first duct sections 11a.

The two first duct sections 11a end in each their respective second duct section 11b defined by second horizontal guide plates 4b and second diverging side walls 15b. The second duct sections 11b extend in opposite directions relative to their respective connected first duct sections 11a.

The second duct sections 11b lead to each their respective slit-shaped outlet 9, through which steam is let out into the space 5 above the ground 6. The two outlets 9 are separated by an outlet guide member 18 which guides the steam down into the space 5. The outlet guide member 18 is in Fig. 2 shown at the points where it intersects the plane of the guide plates 4b.

Due to the fact that the total cross-section area of the outlets 9 is much bigger than the flow area in the inlet 2, the discharge speed of the steam into the space 5 is quite small. Therefore, a cloud of steam is established, said cloud extending homogeneously transversely across the space 5. On account of the diverging ducts 11b, the steam will spread somewhat to the sides of the space 5, for which reason the steam discharge device 10 does not have to extend throughout the whole width of the cover 1, as shown in Fig. 2. The homogeneousness of the cloud is accounted for by the low discharge speed of the steam, whereby turbulence is avoided and consequently mixing with and carrying along of comparatively cold air present under the cover 1.

The cover may for instance have a length of approx. 100 cm, a width of 140 cm and a height of 20 cm, and the steam discharge device may for instance be approx. 100 cm long, 120 cm wide and 10 cm high, the space 5 also being approx. 10 cm high. The outlets 9 may each have a width of 10-40 mm, preferably 15-35 mm and further preferably 20-30 mm. These dimensions are suitable in connection with a steam generator of 160 kW and a travelling speed of approx. 3.6 km/h corresponding to a treatment time of 1 sec.

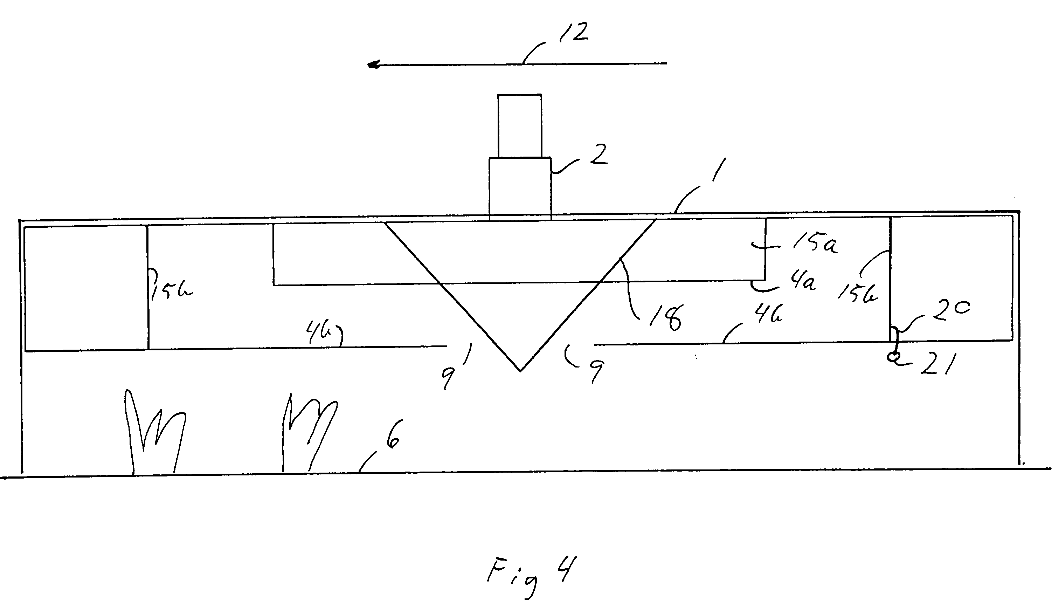

The steam cloud will in the space 5 acquire a concentration or temperature profile which will depend on i.a. the supply speed and the amount of weed under the cover 1, as the steam will condensate on this weed. It is therefore possible to measure the temperature at a certain point in the space 5 and by means of a control device (not shown) to control the steam supply on basis of the temperature measurement. In Figs 2 and 4 an arm 20 with a temperature sensor 21 at the end is shown. A lower temperature will indicate an increased amount of weed 7 in the space 5 and consequently an increased need for steam for scorching this weed 7. During passage of a ground area 6 with lesser weed, the surface on which the steam can condensate will be smaller, i.e. the need for steam is reduced and the temperature will increase. This increase may be used for reducing the steam supply speed by means of the control device. The said control device may be of a completely conventional type, preferably with electronic temperature measurement for the sake of convenience, but any suitable type may be used.

The outlets 9 are in the example shown placed centrally under the cover 1, seen i the travelling direction 12. This central positioning is not imperative, but it is according to the invention of importance that the outlets 9 are positioned at a distance from the front end 13 and the back end 14, respectively, in consideration of the formation of a steam cloud with a profile as mentioned. Thus, preferably at least one outlet 9 is provided, said outlet being positioned more than 20% of the length of the cover 1 from the front end 13 and the back end 14.

It should be noted that several steam discharge devices 10 may be placed under a longer cover 1 in extension of each other, seen in the travelling direction 12, in order to attain a longer scorching time of the weed at a given travelling speed of the weed destroying apparatus.

The outlet or outlets are preferably designed such that they do not surround any areas under the cover, as such surrounded areas are likely to confine comparatively cold air which may isolate part of the weed from the steam and thus prevent an effective treatment.

## Claims

1. An apparatus for destroying unwanted vegetation (7) by means of steam, said apparatus comprising an upwards closed and downwards open cover (1) for moving across the unwanted vegetation (7) in a travelling direction (12) at simultaneous diffuse discharge of steam under the cover (1), and a steam discharge device (10) for the diffuse discharge of steam under the cover (1), said device comprising an inlet (2) for steam supply, a slit-shaped outlet (9) and a horizontal duct (11) for guiding steam from the inlet (2) to the outlet (9), **characterized** in that the slit-shaped outlet (9) extends transversely to the travelling direction (12) at a distance from the front and back ends (13, 14) of the cover (1), and in that the horizontal duct (11a, 11b) is laterally defined by walls (15a, 15b).

2. An apparatus according to claim 1, **characterized** in that the walls (15a, 15b) of the duct (11a, 11b) are diverging.

3. An apparatus according to claim 1 or 2, **characterized** in that the duct comprises a first section (11a) extending in one direction and being directly connected with the inlet (2) and ending in a second section (11b) extending in another direction below the first section (11a) to the outlet (9).

4. An apparatus according to claim 3, **characterized** in that the two first sections (11a) extend in each their respective directions from the inlet (2) and end in each their respective second section (11b) and in that the second sections (11b) extend towards one another.

5. An apparatus according to claim 4, **characterized** in that the second sections (11b) extend to each their respective outlet (9) and in that the two outlets (9) are separated by an outlet guide member (18).

6. An apparatus according to claim 3 or 4, **characterized** by an inlet guide member (19) at the inlet (2) for distributing the steam supplied between the two first sections (11a).

7. An apparatus according to claims 1-6, **characterized** in that the outlet (9) has a width of at least 10 mm, preferably not more than 40 mm, preferably in the range of 15-35 mm, preferably 20-30 mm.

8. An apparatus according to claims 1-7, **characterized** in that the outlet (9) is positioned more than 20% of the length of the cover (1) from the front and back ends (13, 14), respectively, of the cover (1).

9. An apparatus according to claim 8, **characterized** in that the outlet (9) is positioned centrally under the cover (1).

10. An apparatus according to claims 1-9, **characterized** by a temperature sensor (21) placed under the cover (1) and means for controlling the steam supply in dependence of the temperature measured.
